# EUROPEAN PATENT SPECIFICATION

(11) **EP 1 563 563 B1**
(45) Date of publication and mention of the grant of the patent: **26.04.2006**
(21) Application number: 03789805.3
(22) Date of filing: 18.11.2003
(51) Int. Cl.: H01M 8/02

(54) **BIPOLAR PLATE WITH TWO-PASS ANODE**
BIPOLARPLATTE MIT ZWEI-DURCHGÄNGEN-ANODE
PLAQUE BIPOLAIRE AVEC ANODE A DEUX PASSAGES

(30) Priority: 18.11.2002 US 427095 P
(43) Date of publication of application: 17.08.2005
(73) Proprietor: GenCell Corporation, Southbury, CT 06488 (US)
(72) Inventor: ALLEN, Jeffrey, Peter, Naugatuck, CT 06770 (US); ALLEN, Peter, W., Southbury, CT 06488 (US); BERNARD, Randolph, M., New Preston, CT 06777 (US)
(74) Representative: Winckels, Johannes Hubertus F.
(86) International application number: PCT/US2003/036818
(87) International publication number: WO 2004/047208

(56) References cited:
- EP-A- 0 274 003
- GB-A- 2 336 937
- US-B1- 6 383 677

## Description

### FIELD OF INVENTION

This invention relates to bipolar plates for fuel cells.

### BACKGROUND OF THE INVENTION

A fuel cell stack consists of multiple planar cells stacked upon one another, to provide an electrical series relationship. Each cell is comprised of an anode electrode, a cathode electrode, and an electrolyte member. A device known in the art as a bipolar separator plate, bipolar plate, an interconnect, a separator, or a flow field plate, separates the adjacent cells of a stack of cells in a fuel cell stack. The bipolar separator plate may serve several additional purposes, such as mechanical support to withstand the compressive forces applied to hold the fuel cell stack together, providing fluid communication of reactants and coolants to respective flow chambers, and to provide a path for current flow generated by the fuel cell. The plate also may provide a means to remove excess heat generated by the exothermic fuel cell reactions occurring in the fuel cells.

Some bipolar separator plates include an integral coolant chamber or coolant flow passage, which may be designed for gaseous coolant, liquid coolant, or endothermic fuel reforming. A coolant flow passage may be centrally located between two outer metallic sheets, each of which is die-formed with a plurality of grooves, or ribs. The cooling chamber is formed when the maximum elevation of one sheet rests on the maximum depression of the subsequent sheet. Both sheets are structural members of the bipolar plate and therefore must be of sufficient strength and robustness to withstand the compressive sealing force applied to the assembled fuel cell stack U.S. Patent No. 5,795,665 to Allen teaches a "reforming compartment" within an MCFC bipolar separator plate formed when the maximum elevation of a dimpled single-piece bipolar separator rests on the maximum depression of a dimpled subassembly of active components and current collector with a flat sheet barrier disposed between the two components. The resulting chamber is equipped with a reforming catalyst for endothermic stream reforming of fuel.

Various alternatives for flow configuration in the bipolar separator can be found in the various reactant flow and reactant manifold designs. The existing alternatives for flow configuration are co-flow, counter-flow, and cross-flow, as well as variations utilizing serpentine flows. The existing designs for reactant and coolant manifolds are internal, external, or a combination of internal and external. Manifolding the fuel, oxidant and coolant to provide uniform flow to the surfaces of the bipolar separator plate contributes to the overall design complexity.

It is an object of the present invention to provide a bipolar plate that reduces or overcomes some or all of the difficulties inherent in prior known devices. Particular objects and advantages of the invention will be apparent to those skilled in the art, that is, those who are knowledgeable or experienced in this field of technology, in view of the following disclosure of the invention and detailed description of certain preferred embodiments.

### SUMMARY

Preferred embodiments of the present invention can provide a primary flow path for an indirect internal fuel reformer and a secondary flow path for an anode flow field within a bipolar plate equipped with a center flow chamber. The center flow chamber is fluidly coupled with an anode flow field in a manner that provides for the anode reactant fuel to pass through the fuel cell bipolar plate twice.

The entire flow path through the bipolar plate comprises a first internal manifold within a first edge area of the bipolar plate that is fluidly coupled to the center chamber of the bipolar plate. The center chamber of the bipolar plate comprises a plurality of flow channels that are fluidly coupled to a turnaround plenum located in an opposing second edge area of the bipolar plate. The turnaround plenum is fluidly coupled through a plurality of apertures to an anode flow field of the bipolar plate. The anode flow field is comprised of a plurality of flow channels nested with the flow channels of the center chamber and is fluidly coupled with a second internal manifold in the first edge area of the bipolar plate.

In accordance with a first aspect, a fuel cell bipolar plate includes a first plate having a first surface, an opposing second surface, and a plurality of ribs defining anode flow channels on the first surface of the first plate. A second plate has a first surface, an opposing second surface, and a plurality of ribs defining cathode flow channels on the second surface of the first plate. The second plate is nested with the first plate so as to define a plurality of center flow channels extending between the first and second plates. A first edge area is formed at one end of the first and second plates and a second edge area is formed at an opposed end of the first and second plates. A plurality of first internal fuel manifolds is formed in the first edge area and is in fluid communication with the center flow channels. A plurality of second internal fuel manifolds is formed in the first edge area and is in fluid communication with the anode flow channels. A turnaround plenum is formed in the second edge area, and the turnaround plenum is in fluid communication with the center flow channels and the anode flow channels.

In accordance with a second aspect, a fuel cell bipolar plate includes a plate formed of a first plate and a second plate and comprising plurality of segments. The first plate has a first surface, an opposing second surface, and a plurality of ribs defining anode flow channels on the first surface of the first plate. The second plate has a first surface, an opposing second surface, and a plurality of ribs defining cathode flow channels on the second surface of the first plate. The second plate is nested with the first plate so as to define a plurality of center flow channels extending between the first and second plates. A first edge area is formed at one end of the first and second plates and a second edge area is formed at an opposed end of the first and second plates. A first internal fuel manifold is formed in the first edge area of each segment and is in fluid communication with the center flow channels. A second internal fuel manifold is formed in the first edge area of each segment and is in fluid communication with the anode flow channels. A turnaround plenum is formed in the second edge area, and the turnaround plenum is in fluid communication with the center flow channels and the anode flow channels.

These and additional features and advantages of the invention disclosed here will be further understood from the following detailed disclosure of certain preferred embodiments.

### BRIEF DESCRIPTION OF THE DRAWINGS

The aspects of the invention will become apparent upon reading the following detailed description in conjunction with the accompanying drawings, in which:
FIG. 1 is a plan view of a bipolar plate of the present invention.
FIG. 2 is a cross section of the bipolar plate of FIG. 1 taken along line 2-2 of Fig. 1.
FIG. 3 is a cross section of the bipolar plate of FIG. 1 taken along line 3-3 of Fig. 1.
FIG. 4 is a perspective view, shown partially cut-away, of the bipolar plate of FIG. 1, illustrating a turnaround plenum and an aperture.
FIG. 5 is a schematic representation of reactant flow paths through the bipolar plate of FIG. 1.

The figures referred to above are not drawn necessarily to scale and should be understood to present a representation of the invention, illustrative of the principles involved. Some features of the bipolar plate with a two-pass anode depicted in the drawings have been enlarged or distorted relative to others to facilitate explanation and understanding. The same reference numbers are used in the drawings for similar or identical components and features shown in various alternative embodiments. Bipolar plates with a two-pass anode as disclosed herein would have configurations and components determined, in part, by the intended application and environment in which they are used.

### DETAILED DESCRIPTION OF CERTAIN PREFERRED EMBODIMENTS

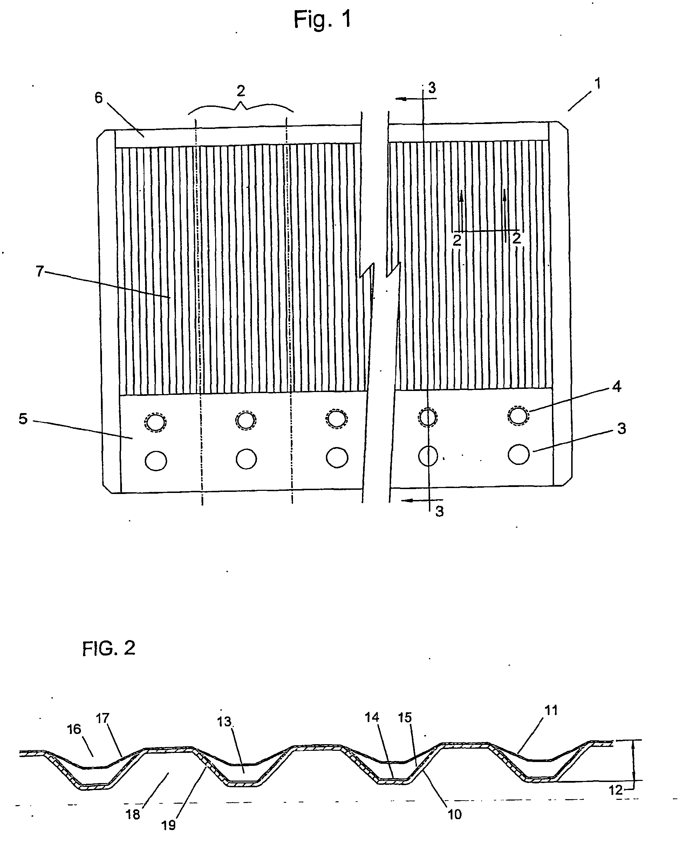

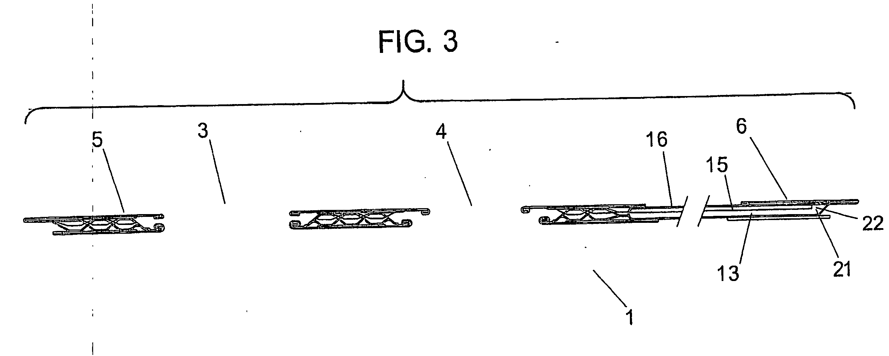

In FIG. 1, a bipolar plate 1 with a center chamber formed of flow channels is shown in plan view comprising a series of repeated segments 2 that are an artifact of the progressively tooled stamping dies that form the bipolar plate 1. Bipolar plate 1 is further comprised of first internal fuel manifolds 3 and second internal fuel manifolds 4 within first opposing edge area 5 of the bipolar plate 1. The bipolar plate is further comprised of a second opposing edge area 6. A ribbed active area 7 of the bipolar plate is seen positioned between first and second opposing edge areas 5, 6. A turn-around plenum 21, seen in FIG. 3 and described in greater detail below, is positioned within second opposing edge area 6. Internal manifolds 3, 4 of the first edge area 5 are adjacent to one another and, in a preferred embodiment, are arranged so that the centers of internal manifolds 3, 4 for a particular segment 2 of bipolar plate 1 are on a line that extends substantially parallel to the general flow path of the bipolar plate 1 through active area 7.

A description of a bipolar plate and a method of forming such a plate is found in U.S. Patent Application Serial No. 09/714,526, entitled ''Fuel Cell Bipolar Separator Plate and Current Collector Assembly and Method of Manufacture," filed on November 16, 2000.

FIG. 2 is a cross section of the bipolar plate 1 taken along line 2-2 of FIG. 1. The bipolar plate 1 is comprised of a first sheet 10 and a second sheet 11, each preferably formed of metal. The first sheet 10 and second sheet 11 comprising the bipolar plate 1 are produced with patterns of flow structure produced by the same progressive stretch-forming tool. The structure of the first sheet 10 is stamped such that it has ribs with a greater depth 12 than ribs formed in the second sheet 11. As a result, the two sheets of material will nest when joined together, creating center flow channels 13 within ribbed active area 7, between the first and second sheets 10, 11. A first surface 14 of the second sheet 11 that faces first sheet 10 is lined with a catalyst 15 within center flow channels 13 of bipolar plate 1. The catalyst 15 is comprised of any of those catalysts known in the art to promote steam reforming of methane. Anode flow channels 16 are formed on outwardly facing first surface 17 of the second sheet 11 and extend along ribbed active area 7. An inwardly facing surface of second sheet 11 forms a part of center flow channels 13. Cathode flow channels 18 are formed on an outwardly facing second surface 19 of the first sheet 10 and extend along ribbed active area 7.

In FIG. 3, bipolar plate 1 with center flow channels 13 is shown in section, in a view taken along line 3-3 of FIG. 1. As noted above, a turnaround plenum 21 is formed within second edge area 6, and is in fluid communication with center flow channels 13. Apertures 22 are formed in second edge area 6, providing fluid communication between turnaround plenum 21 and anode flow channels 16. Thus, a fluid flow path exists from first internal fuel manifolds 3 located within first edge area 5, through center flow channels 13, through turnaround plenum 21 and apertures 22 within second edge area 6, through anode flow channels 16, and out to second internal manifolds 4 within first edge area 5. As noted above, catalyst 15 is deposited on surface 14 of first sheet 10 within flow channels 13.

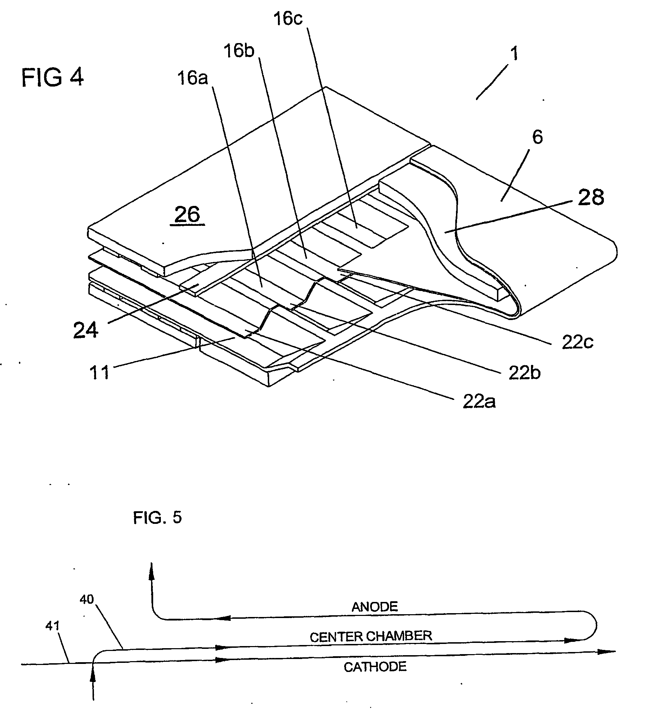

In FIG. 4, an isometric cut-away of the bipolar plate 1 is shown. Each of a plurality of apertures 22a, 22b, and 22c is seen to be at the terminal ends of a corresponding anode flow channel 16a, 16b, 16c of the second sheet 11 and within the second edge area 6. A spacer 28 is found in second edge area 6, and serves to ensure that the portion of bipolar plate 1 folded back on itself to form second edge area 6 has the proper alignment with the top surface of the remainder of bipolar plate 1. A plurality of flat wires 24 are positioned on first sheet 11. An electrode 26 is positioned on flat wires 24 such that reactant gasses flowing through anode flow channels 16a, 16b, and 16c can react with electrode 26. Further description of the use of such flat wires is provided in commonly owned U.S. Patent No. 6,383,677, entitled "Fuel Cell Current Collector," issued on May 7, 2002, the entire disclosure of which is incorporated herein by reference for all purposes.

On the first pass of the reactant through center flow channels 13 of bipolar plate 1, the composition of the anode reactant is a mixture of methane, steam, and recirculated anode exhaust. Catalyst 15 on surface 14 of center flow channels 13 promotes steam reforming of the methane. The composition of the anode reactant provides the ability to achieve equilibrium methane conversion of 99.9 percent in the presence of the steam reforming catalyst. The reformed anode reactant flows out of center flow channels 13 to turnaround plenum 21.

On the second pass, after passing through turnaround plenum 21 and aperture 22, the reformed anode reactant will reverse its direction of flow through bipolar plate 1 and pass through anode flow channels 16. The anode reactant will enter the anode flow field and electrochemically react on anode electrode 26 of the fuel cell. Thus, center flow channels 13 are fluidly coupled with anode flow channels 16 in a manner that provides for the anode reactant fuel to pass through the fuel cell bipolar plate twice.

In FIG. 5, a preferred embodiment of an anode reactant flow path 40 and a cathode reactant flow path 41 are schematically shown relative to each other. In this embodiment, cathode flow path 41 flows counter to the direction of flow of anode flow path 40 as the anode reactant passes through anode flow channels 16. Cathode flow path 41 is coincident with anode reactant flow path 40 as the anode reactant passes through center flow channels 13. It is to be appreciated that other flow path configurations, such as counter-flow and cross-flow, are considered to be within the scope of the present invention.

## Claims

1. A fuel cell bipolar plate comprising, in combination:
a first plate having a first surface, an opposing second surface, and a plurality of ribs defining anode flow channels on the first surface of the first plate;
a second plate having a first surface, an opposing second surface, and a plurality of ribs defining cathode flow channels on the second surface of the first plate, the second plate nested with the first plate so as to define a plurality of center flow channels extending between the first and second plates;
a first edge area at one end of the first and second plates and a second edge area at an opposed end of the first and second plates;
a plurality of first internal fuel manifolds formed in the first edge area and in fluid communication with the center flow channels;
a plurality of second internal fuel manifolds formed in the first edge area and in fluid communication with the anode flow channels, and;
a turnaround plenum formed in the second edge area, the turnaround plenum in fluid communication with the center flow channels and the anode flow channels.

2. The bipolar plate of claim 1, further comprising a catalyst on the first surface of the second plate within the center flow channels.

3. The bipolar plate of claim 1, further comprising an aperture formed in the second seal area and fluidly connecting the turnaround plenum with the anode flow channels.

4. The bipolar plate of claim 1, wherein a portion of the second end area is folded over onto itself, and a spacer is positioned within the folded over portion.

5. The bipolar plate of claim 1, wherein the bipolar plate is comprised of a plurality of segments, each segment having a first internal fuel manifold and a second internal fuel manifold.

6. The bipolar plate of claim 5, wherein centers of the first and second internal fuel manifolds of each segment are on a line that extends substantially parallel to a flow path of the bipolar plate.

7. The bipolar plate of claim 1, further comprising a plurality of flat wires positioned on the first surface of the first sheet.

8. The bipolar plate of claim 7, further comprising an electrode positioned on the flat wires.

9. A fuel cell bipolar plate comprising, in combination:
a plate formed of a first plate and a second plate and comprising plurality of segments, the first plate having a first surface, an opposing second surface, and a plurality of ribs defining anode flow channels on the first surface of the first plate, the second plate having a first surface, an opposing second surface, and a plurality of ribs defining cathode flow channels on the second surface of the first plate, the second plate nested with the first plate so as to define a plurality of center flow channels extending between the first and second plates;
a first edge area at one end of the first and second plates and a second edge area at an opposed end of the first and second plates;
a first internal fuel manifold formed in the first edge area of each segment and in fluid communication with the center flow channels;
a second internal fuel manifold formed in the first edge area of each segment and in fluid communication with the anode flow channels, and;
a turnaround plenum formed in the second edge area, the turnaround plenum in fluid communication with the center flow channels and the anode flow channels.

10. The bipolar plate of claim 9, further comprising a catalyst on the first surface of the second plate within the center flow channels.

11. The bipolar plate of claim 9, further comprising an aperture formed in the second seal area and fluidly connecting the turnaround plenum with the anode flow channels.

12. The bipolar plate of claim 9, wherein a portion of the second end area is folded over onto itself, and a spacer is positioned within the folded over portion.

13. The bipolar plate of claim 9, wherein centers of the first and second internal fuel manifolds of each segment are on a line that extends substantially parallel to a flow path of the bipolar plate.

14. The bipolar plate of claim 9, further comprising a plurality of flat wires positioned on the first surface of the first sheet.

15. The bipolar plate of claim 14, further comprising an electrode positioned on the flat wires.

## Patentansprüche

1. Brennstoffzellen-Bipolarplatte, die in Kombination aufweist:
eine erste Platte mit einer ersten Fläche, einer gegenüberliegenden zweiten Fläche und mehreren Rippen, die Anoden-Strömungskanäle auf der ersten Fläche der ersten Platte bilden;
eine zweite Platte mit einer ersten Fläche, einer gegenüberliegenden zweiten Fläche und mehreren Rippen, die Kathoden-Strömungskanäle auf der zweiten Fläche der ersten Platte bilden, wobei die zweite Platte mit der ersten Platte genestet ist, um mehrere zwischen den ersten und zweiten Platten verlaufende zentrale Strömungskanäle zu bilden;
einen ersten Randbereich an einem Ede der ersten und zweiten Platten und einen zweiten Randbereich an einem entgegengesetzten Ende der ersten und zweiten Platten;
mehrere erste innenliegende Brennstoffverteiler, die in dem ersten Randbereich ausgebildet sind und mit den zentralen Strömungskanälen in Fluidverbindung stehen;
mehrere zweite innenliegende Brennstoffverteiler, die in dem ersten Randbereich ausgebildet sind und mit den Anoden-Strömungskanälen in Fluidverbindung stehen; und
einen in dem zweiten Randbereich ausgebildeten Umkehrraum, der mit den zentralen Strömungskanälen und den Anoden-Strömungskanälen in Fluidverbindung steht.

2. Bipolarplatte nach Anspruch 1, ferner mit einem Katalysator auf der ersten Fläche der zweiten Platte innerhalb der zentralen Strömungskanäle.

3. Bipolarplatte nach Anspruch 1, die ferner eine Öffnung in dem zweiten Dichtungsbereich aufweist und den Umkehrraum in Fluidverbindung mit den Anoden-Strömungskanälen bringt.

4. Bipolarplatte nach Anspruch 1, bei der ein Teil des zweiten Endbereichs zurückgeklappt ist und ein Abstandshalter innerhalb des zurückgeklappten Bereichs positioniert ist.

5. Bipolarplatte nach Anspruch 1, wobei die Bipolarplatte mehrere Segmente aufweist, von denen jedes einen ersten innenliegenden Verteiler und einen zweiten innenliegenden Verteiler aufweist.

6. Bipolarplatte nach Anspruch 5, bei der Zentren der ersten und zweiten innenliegenden Brennstoffverteiler jedes Segments in einer Linie angeordnet sind, die im wesentlichen parallel zu einem Strömungsweg der Bipolarplatte verläuft.

7. Bipolarplatte nach Anspruch 1, ferner mit mehreren Flachdrähten auf der ersten Fläche der ersten Platte.

8. Bipolarplatte nach Anspruch 7, ferner mit einer Elektrode auf den Flachdrähten.

9. Brennstoffzellen-Bipolarplatte, die in Kombination aufweist:
eine aus einer ersten Platte und einer zweiten Platte gebildete Platte mit mehreren Segmenten, wobei die erste Platte eine erste Fläche, eine gegenüberliegende zweite Fläche und mehrere Rippen aufweist, die Anoden-Strömungskanäle auf der ersten Fläche der ersten Platte bilden; die zweite Platte eine erste Fläche, eine gegenüberliegende zweite Fläche und mehrere Rippen aufweist, die Kathoden-Strömungskanäle auf der zweiten Fläche der ersten Platte bilden; und die zweite Platte mit der ersten Platte genestet ist, um mehrere zwischen den ersten und zweiten Platten verlaufende zentrale Strömungskanäle zu bilden;
einen ersten Randbereich an einem Ende der ersten und zweiten Platten und einen zweiten Randbereich an einem entgegengesetzten Ende der ersten und zweiten Platten;
einen ersten innenliegenden Brennstoffverteiler, der in dem ersten Randbereich jedes Segments ausgebildet ist und mit den zentralen Strömungskanälen in Fluidverbindung steht;
einen zweiten innenliegenden Brennstoffverteiler, der in dem ersten Randbereich jedes Segments ausgebildet ist und mit den Anoden-Strömungskanälen in Fluidverbindung steht; und
einen in dem zweiten Randbereich ausgebildeten Umkehrraum, der mit den zentralen Strömungskanälen und den Anoden-Strömungskanälen in Fluidverbindung steht.

10. Bipolarplatte nach Anspruch 9, ferner mit einem Katalysator auf der ersten Fläche der zweiten Platte innerhalb der zentralen Strömungskanäle.

11. Bipolarplatte nach Anspruch 9, die ferner eine Öffnung in dem zweiten Dichtungsbereich aufweist und den Umkehrraum in Fluidverbindung mit den Anoden-Strömungskanälen bringt.

12. Bipolarplatte nach Anspruch 9, bei der ein Teil des zweiten Endbereichs zurückgeklappt ist und ein Abstandshalter innerhalb des zurückgeklappten Bereichs positioniert ist.

13. Bipolarplatte nach Anspruch 9, bei der Zentren der ersten und zweiten innenliegenden Brennstoffverteiler jedes Segments in einer Linie angeordnet sind, die im wesentlichen parallel zu einem Strömungsweg der Bipolarplatte verläuft.

14. Bipolarplatte nach Anspruch 9, ferner mit mehreren Flachdrähten auf der ersten Fläche der ersten Platte.

15. Bipolarplatte nach Anspruch 14, ferner mit einer Elektrode auf den Flachdrähten.

## Revendications

1. Plaque bipolaire de pile à combustible comportant, en combinaison :
une première plaque possédant une première surface, une seconde surface en vis-à-vis, et une pluralité de nervures définissant des canaux d'écoulement d'anode sur la première surface de la première plaque ;
une seconde plaque possédant une première surface, une seconde surface en vis-à-vis, et une pluralité de nervures définissant des canaux d'écoulement de cathode sur la seconde surface de la première plaque, la seconde plaque emboîtée dans la première plaque de manière à définir une pluralité de canaux d'écoulement centraux s'étendant entre les première et seconde plaques ;
une première zone de bord à une extrémité des première et seconde plaques et une seconde zone de bord à une extrémité opposée des première et seconde plaques ;
une pluralité de premières tubulures d'alimentation de carburant internes formés dans la première zone de bord et en communication fluide avec les canaux d'écoulement centraux ;
une pluralité de secondes tubulures d'alimentation de carburant internes formés dans la première zone de bord et en communication fluide avec les canaux d'écoulement d'anode, et ;
un plénum de changement de direction formé dans la seconde zone de bord, le plénum de changement de direction en communication fluide avec les canaux d'écoulement centraux et les canaux d'écoulement d'anode.

2. Plaque bipolaire selon la revendication 1, comportant en outre un catalyseur sur la première surface de la seconde plaque à l'intérieur des canaux d'écoulement centraux.

3. Plaque bipolaire selon la revendication 1, comportant en outre un orifice formé dans la seconde zone d'étanchéité et reliant de façon fluide le plénum de changement de direction de cycle de rotation avec les canaux d'écoulement d'anode.

4. Plaque bipolaire selon la revendication 1, dans laquelle une partie de la seconde zone terminale est repliée sur elle-même, et un écarteur est placé à l'intérieur de la partie repliée.

5. Plaque bipolaire selon la revendication 1, dans laquelle la plaque bipolaire est constituée d'une pluralité de segments, chaque segment possédant une première tubulure d'alimentation de carburant interne et une seconde tubulure d'alimentation de carburant interne.

6. Plaque bipolaire selon la revendication 5, dans laquelle les centres des première et seconde tubulures d'alimentation de carburant internes de chaque segment se trouvent sur une ligne qui s'étend sensiblement parallèlement au trajet d'écoulement de la plaque bipolaire.

7. Plaque bipolaire selon la revendication 1, comportant en outre une pluralité de câbles plats placés sur la première surface de la première feuille.

8. Plaque bipolaire selon la revendication 7, comportant en outre une électrode placée sur les câbles plats.

9. Plaque bipolaire de pile à combustible comportant, en combinaison :
une plaque formée d'une première plaque et d'une seconde plaque et comportant une pluralité de segments, la première plaque possédant une première surface, une seconde surface en vis-à-vis, et une pluralité de nervures définissant des canaux d'écoulement d'anode sur la première surface de la première plaque, la seconde plaque possédant une première surface, une seconde surface en vis-à-vis, et une pluralité de nervures définissant des canaux d'écoulement de cathode sur la seconde surface de la première plaque, la seconde plaque emboîtée dans la première plaque de manière à définir une pluralité de canaux d'écoulement centraux s'étendant entre les première et seconde plaques ;
une première zone de bord à une extrémité des première et seconde plaques et une seconde zone de bord à une extrémité opposée des première et seconde plaques ;
une première tubulure d'alimentation de carburant interne formé dans la première zone de bord de chaque segment et en communication fluide avec les canaux d'écoulement centraux ;
une seconde tubulure d'alimentation de carburant interne formé dans la première zone de bord de chaque segment et en communication fluide avec les canaux d'écoulement d'anode, et ;
un plénum de changement de direction formé dans la seconde zone de bord, le plénum de changement de direction en communication fluide avec les canaux d'écoulement centraux et les canaux d'écoulement d'anode.

10. Plaque bipolaire selon la revendication 9, comportant en outre un catalyseur sur la première surface de la seconde plaque à l'intérieur des canaux d'écoulement centraux.

11. Plaque bipolaire selon la revendication 9, comportant en outre un orifice formé dans la seconde zone d'étanchéité et reliant de façon fluide le plénum de changement de direction aux canaux d'écoulement d'anode.

12. Plaque bipolaire selon la revendication 9, dans laquelle une partie de la seconde zone terminale est repliée sur elle-même, et un écarteur est placé à l'intérieur de la partie repliée.

13. Plaque bipolaire selon la revendication 9, dans laquelle les centres des première et seconde tubulures d'alimentation de carburant internes de chaque segment se trouvent sur une ligne qui s'étend sensiblement parallèlement au trajet d'écoulement de la plaque bipolaire.

14. Plaque bipolaire selon la revendication 9, comportant en outre une pluralité de câbles plats placés sur la première surface de la première feuille.

15. Plaque bipolaire selon la revendication 14, comportant en outre une électrode placée sur les câbles plats.
